# EUROPEAN PATENT SPECIFICATION

(11) **EP 1 325 091 B1**
(45) Date of publication and mention of the grant of the patent: **14.07.2004**
(21) Application number: 01973439.1
(22) Date of filing: 24.09.2001
(51) Int. Cl.: C09D 11/00

(54) **AQUEOUS INK COMPOSITON FOR INK JET PRINTER**
WÄSSRIGE TINTENZUSAMMENSETZUNG FÜR DEN TINTENSTRAHLDRUCKER
COMPOSITION D'ENCRE AQUEUSE POUR IMPRIMANTE A JET D'ENCRE

(30) Priority: 25.09.2000 JP 2000290255
(43) Date of publication of application: 09.07.2003
(73) Proprietor: 3M Innovative Properties Company, St. Paul, MN 55133-3427 (US)
(72) Inventor: SAITO, Koji, Higashine-city, Yamagata 999-3775 (JP)
(74) Representative: VOSSIUS & PARTNER
(86) International application number: PCT/US2001/029820
(87) International publication number: WO 2002/026899

(56) References cited:
- US-A- 4 597 794
- US-A- 5 725 647

## Description

The present invention relates to an aqueous ink composition suitable for an ink jet printer, particularly to an aqueous pigment-dispersed ink composition suitable for a bubble jet ink-ejecting print head.

An ink for an ink jet printer needs not only fastness of a printed image (particularly light resistance and water resistance) of a printed image, which is essentially necessary for ink, but also characteristics such as stability for ink-ejecting (particularly preventing the ink from hardening at an ejecting nozzle contained in a print head) and the like. Therefore, the ink for use with an ink jet printer has been studied separately from conventional inks for printing or writing instruments.

U.S. Patent No. 4,597,794 (corresponding to Japanese Patent Kokai Publication Sho 56(1981)-157470) and Japanese Patent Kokai Publication Hei 6 (1994)-100812 disclose ink compositions for an ink jet printer, which comprise a pigment and/or colorant, a water-soluble resin, a water-soluble organic solvent and water. In addition, the publications propose that the ink compositions achieve good durability and excellent ink-ejection stability by using the pigment and the colorant having a certain chemical structure or by formulating a particular compound (such as urea derivatives or polymethyl methacrylate microparticles). The water-soluble resin used in the publications may be one which is generally used in the art, and includes, for example, a styrene - (meth)acrylic acid type water-soluble resin (particularly styrene - acrylic acid - ethyl acrylate copolymer and the like).

In the technologies described in the publications, the styrene - (meth)acrylic acid type water-soluble resin mainly used, when combined with a relatively large amount of the water-soluble organic solvent used in an aqueous ink, is effective on an improvement of thermal stability. However, since the water-soluble organic solvent has low molecular weight, its resulting ink contains hydrophilic chemicals in a larger number of molecular or mole if the solvent is used in a large amount. This in turn causes slow drying rate of printed images. Faster drying rate of printed images is preferable in view ofrequirements for high speed printing in the ink jet printer. If a water-soluble organic solvent having a relatively low volatility is employed in a large amount, water resistance of printed images obtained from the ink composition may be deteriorated.

U.S. Patent No. 5,725,647 proposes that sulfonated polyethylene oxide is used in an ink composition as a lubricant, to effectively prevent hardening of the ink composition at a printer head nozzle.

The sulfonated polyethylene oxide is one of polymer surfactant, and contains
(i) a molecular backbone substantially including a polyethylene oxide unit or a combination of polyethylene oxide unit and another polymer unit (such as polypropylene glycol and the like), and
(ii) at least one sulfonated unit which is incorporated into the molecular backbone and includes a sulfonic acid group or a metal salt thereof.

The number average molecular weight is generally 500 to 90,000. However, it is not disclosed in U.S. Patent No. 5,725,647 that a resin component is added to improve performance of the printed image (i.e. an ink image on a medium made of the printed ink composition), such as the water resistance and the like.

For bubble jet ink-ejecting printing, ink is heated at a nozzle contained in a print head and at a periphery of the nozzle. On the other hand, in view of increase of resolution of a printed image, a diameter of the nozzle is required to be miniaturized. In this point of view, ink for ink-jet printers is required not only to have clogging resistance at an ejecting nozzle which mainly causes hardening of ink at the ejecting nozzle, but also to have thermal stability enough to clear a given level of a heating test. In this context, the heating test is conducted as follows: ink is charged into a glass container and sealed with a cover equipped with a structure for releasing an evaporating gas out of the container, followed by leaving it still in an oven at 65 °C for a given period of time (generally, a week). After passing the period of time, the container removed from the oven is placed upside down to visually observe whether the precipitation is generated or not, and how the ink attached on a wall of the container is, and then thermal stability is evaluated. From the observation, when less precipitation and no agglomerated cake of the ink component in the container, as well as no tint of the ink attached on the wall are observed, the ink is judged to have good thermal stability.

For the bubble jet ink-ejecting printing, it is difficult to achieve necessary thermal stability even if sulfonated polyethylene oxide, as described in US patent No.5,725,647, is used as lubricant.

The object of the present invention is to provide an aqueous ink composition, that has good thermal stability, effectively prevents clogging at a nozzle and effectively increases drying rate and durability (particularly, water resistance) of the printed image, even when used for the high resolution bubble jet ink-ejecting printer as mentioned above.

Accordingly, the present invention provides an aqueous ink composition for an ink jet printer, comprising (a) a water-soluble pigment dispersing resin, (b) a pigment, (c) an aqueous solvent and (d) a humectant, wherein the water-soluble pigment dispersing resin (a) is a styrene - (meth)acrylic acid type resin, and the humectant (d) contains sulfonated polyethylene oxide.

The aqueous solvent (c) used in the aqueous ink composition for an ink jet printer can be water alone or may contain polyhydric alcohol. When the aqueous solvent (c) contains polyhydric alcohol, it has been also found that polyhydric alcohol is preferably used in a less amount, for example, within a range of 1.5 and 10 % by weight based on the total weight of the aqueous ink composition.

A method for generating technical effects of the present invention is described as follows, but since the content mentioned hereinafter is merely an expectable tentative theory at present, it should not be understood that the present invention functions solely based on the theory.

The aqueous ink composition of the present invention contains a mixture of a styrene - (meth)acrylic acid type water-soluble resin and sulfonated polyethylene oxide (humectant). This can allow the aqueous ink composition to prevent from hardening at a nozzle contained in a printer head, as well as to improve thermal stability and to effectively prevent clogging at the nozzle.

Sulfonated polyethylene oxide is considered to have two functions, one is a function as water-soluble organic solvent, for example polyhydric alcohols, and the other is a function as surfactant. The function as the water-soluble organic solvent can provide the ink composition with moderate hygroscopic properties to effectively prevent its hardening. On the other hand, the function as the surfactant can increase thermal stability to some degree, but does not increase sufficiently in case when sulfonated polyethylene oxide is used alone. The styrene - (meth)acrylic acid type water-soluble resin acts to increase thermal stability in conjunction with sulfonated polyethylene oxide. The reason why the function occurs has not been clear yet, but is considered that sulfonated polyethylene oxide forms an absorption layer on an interface between a surface of the pigment and water, and then, the styrene - (meth)acrylic acid type water-soluble resin interacts with the absorption layer to stabilize, so that dispersed stability of the pigment may be effectively improved.

On the other hand, the styrene - (meth)acrylic acid type water-soluble resin can also act to increase water resistance of printed images. In dried ink, that is a printed image, the styrene - (meth)acrylic acid type water-soluble resin performs as a binder for bonding the pigment to a surface of a medium to be printed (i.e. a printing medium). It is then considered that the interaction between the styrene - (meth)acrylic acid type water-soluble resin and the absorption layer of sulfonated polyethylene oxide performs to increase the action for bonding to the pigment, that is to improve water resistance.

For the purpose of more effective improvement of the function for preventing clogging at a nozzle, the aqueous solvent contained in the aqueous ink composition preferably contains the water-soluble organic solvent, more preferably polyhydric alcohol. It is known that the more the content of the water-soluble organic solvent (a non-ionic hydrophilic compound) is, the slower drying rate of the printed image is. According to the present invention, since a content of the water-soluble organic solvent (more preferably polyhydric alcohol) can be controlled as low as possible by formulating sulfonated polyethylene oxide as the humectant, thermal stability can be effectively improve without decreasing drying rate, and therefore, clogging of the nozzle can be also prevented with advantage. In view of improving drying rate as fast as possible, a proportion of polyhydric alcohol may be preferably controlled to lower than 10 % by weight based on the total weight of the aqueous ink composition.

The present invention will briefly explain with reference to the following preferred embodiment of the present invention.

The aqueous ink composition of the present invention contains (a) a water-soluble pigment dispersing resin, (b) a pigment, (c) an aqueous solvent and (d) a humectant, wherein the water-soluble pigment dispersing resin (a) is a styrene - (meth)acrylic acid type water-soluble resin, and the humectant (d) contains sulfonated polyethylene oxide. First of all, the water-soluble pigment dispersing resin (a) and the humectant (d), which are distinctive components of the present invention, will be explained.

### Water-soluble pigment dispersing resin (a)

The water-soluble pigment dispersing resin (a) used in the present invention is the styrene - (meth)acrylic acid type water-soluble resin. The styrene - (meth)acrylic acid type water-soluble resin includes a copolymer of styrene and acrylic acid (or methacrylic acid), or a copolymer formed three or more members, styrene, acrylic acid (or methacrylic acid) and another polymerizable monomer. Thus, it may be a copolymer obtained by polymerizing a starting monomer mixture including styrene, (meth)acrylic acid and if necessary, another copolymerizable monomer.

An example of the copolymerizable monomer includes maleic acid, a (meth)acryl ester, vinyl naphthalene, α-methyl styrene and the like. A content of the copolymerizable monomer, excepting styrene and (meth)acrylic acid, contained in the monomer mixture is preferably lower than 45 % by weight based on the total weight of the monomers.

A specific example of the styrene - (meth)acrylic acid type water-soluble resin includes styrene-acrylic copolymer, styrene-acrylic-alkyl acrylate copolymer, styrene - (meth)acrylic copolymer, styrene - (meth)acrylic-alkyl acrylate copolymer, or salts of these polymers or the like.

Physical and chemical properties of the styrene - (meth)acrylic acid type water-soluble resin are not limited as long as it is soluble in an aqueous solvent. Preferably, a weight average molecular weight of the styrene - (meth)acrylic acid type water-soluble resin may be within a range of about 3,000 to about 50,000.

The water-soluble pigment dispersing resin (a) of the present invention essentially includes the styrene - (meth)acrylic acid type water-soluble resin, but may contain another water-soluble resin. An example of the other water-soluble resin includes styrene-maleic acid copolymer, styrene-maleic acid -alkyl acrylate copolymer, styrene-maleic acid half-ester copolymer, vinyl naphthalene-acrylic acid copolymer, vinyl naphthalene-maleic acid copolymer, styrene-maleic acid anhydride-maleic acid half-ester copolymer and the like. When the other water-soluble pigment dispersing resin is employed, an amount ratio of the styrene - (meth)acrylic acid type water-soluble resin in the total amount of the water-soluble resin is generally not less than 60 % by weight, preferably not less than 70 % by weight, more preferably not less than 80 % by weight.

A concentration of the styrene - (meth)acrylic acid type water-soluble resin may be preferably 0.03 to 5 % by weight, more preferably 0.05 to 2 % by weight based on the total weight of the aqueous ink composition. When the concentration of the styrene - (meth)acrylic acid type water-soluble resin is too low, the technical effects as mentioned above may decrease, and particularly thermal stability and water resistance may not be improved. Additionally, quality of a printed image may be decreased, such as a failure in fineness of a detail of the printed image and the like. When the concentration is too high, the quality of the printed image may decrease.

### Humectant (d)

The humectant (d) used in the present invention should contain sulfonated polyethylene oxide. An example of sulfonated polyethylene oxide used in the present invention includes ones as described in US Patent No. 5,725,647 mentioned above, and may be any one of compounds defined as follows: the compounds containing
(i) a molecular backbone substantially consisting of a polyethylene oxide unit, or a combination of a polyethylene oxide unit and another polymer unit, and
(ii) at least one sulfonated unit which is incorporated into the molecular backbone and contains a sulfonic acid group or a metal salt thereof.

Among those disclosed in US Patent No. 5,725,647, the most preferred is a compound obtained by transesterifying dimethyl 5-sulfoisophthalate sodium salt with polyethylene oxide. The resulting compound is sulfonated polyethylene oxide substantially containing polyethylene oxide as the molecular backbone, as shown in the following chemical formula. The sulfonated unit is a residue of sulfonate sodium salt of sulfoisophthalic acid (benzenesulfonate sodium salt) mentioned above.

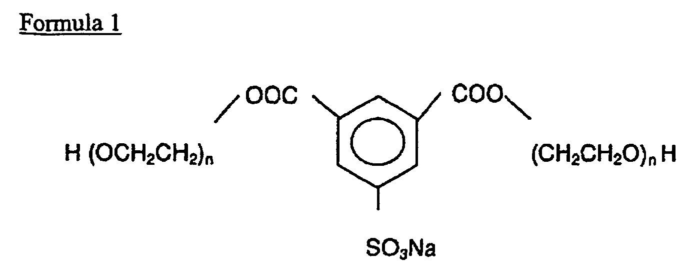

The compound having the above chemical formula can easily balance the function as the water-soluble organic solvent with the function as the surfactant to improve both functions, and it can effectively interact with the styrene - (meth)acrylic acid type water-soluble resin. Thus, it is very advantageous for the compound to effectively increase the effect for preventing the nozzle clogging and thermal stability of the aqueous ink composition. In order to take these effects much effectively, polyethylene oxide as the starting material has a number average molecular weight of 400 to 10,000, preferably 500 to 700, more preferably 550 to 650. When the number average molecular weight of polyethylene oxide is too low, the function as the water-soluble organic solvent may decrease, and when it is too high, the function as the surfactant may decrease.

The sulfonated polyethylene oxide having the above chemical structure can be prepared, for example, as follows: first, a given amount of dimethyl 5-sulfoisophthalate sodium salt and a given amount of polyethylene oxide are charged into a flask having a certain volume and then mixed. The mixture is heated to the first temperature (usually at 175 °C) for a given period of time (usually for about one hour) in a vacuum condition with stirring. Then, nitrogen gas is introduced into the flask to return the inner pressure to atmospheric pressure, and then, a given amount of acetate zinc salt is added to the mixture. Sequentially, the mixture is heated to the second temperature for a given period of time (usually at 220°C for two hours) in a nitrogen atmosphere to transesterify. At this time, the flask is equipped with a condenser unit for concentrating and collecting methanol produced from the reaction. When methanol stops producing, the condenser unit is removed, and the product in the flask is cooled from the second temperature to the first temperature over about one hour under vacuum. After the period of time, it is cooled to the third temperature (usually lower than 100 °C), and the inner pressure changes from vacuum to atmospheric pressure to collect the product. The resulting product can be optionally purified, and then the objective sulfonated polyethylene oxide is obtained.

The sulfonated polyethylene oxide is usually contained in an amount of 0.3 to 7 percents by weight, preferably 1 to 4 percents by weight based on the total weight of the aqueous ink composition. When the concentration of sulfonated polyethylene oxide is too low, the technical effects mentioned above may decrease, particularly thermal stability may decrease and nozzle clogging due to the hardening of the ink composition may not be effectively prevented. When the concentration is too high, drying rate may be lowered, depending on an amount of the water-soluble organic solvent used.

### Pigment (b)

The pigment (b) used in the present invention, is not limited, but may be one which is conventionally used in the ink jet printer. An example of the pigment used includes quinacridone pigment, phthalocyanine pigment, carbon black, indigo pigment, azo pigment, cadmium based pigment and the like. A content of the pigment in the aqueous ink composition may be within a range conventionally used, specifically 0.3 to 10. % by weight, preferably 0.5 to 5.0 % by weight based on the total weight of the ink composition. When the content is no more than 0.3 % by weight, coloring characteristics may be deteriorated. When it is more than 10.0 % by weight, nozzle clogging may not be effectively prevented.

The pigment used generally has an average of the particle size of no more than 200 nm, in a form of a microparticle, but is not limited thereto. When the size is too big, nozzle clogging of the printer head may easily occur.

The pigment is generally prepared as a pigment dispersant containing three components of water / an organic pigment (or an inorganic pigment) / the styrene - (meth)acrylic acid type water-soluble resin. The pigment dispersant commercially available may be also used, including, for example, the trade name of "GA color series" available from MIKUNI COLORANT K.K. The pigment dispersant may be prepared by dispersing the starting material containing the pigment, an aqueous solvent, the styrene - (meth)acrylic acid type water-soluble resin and an adjuvant such as the surfactant and the like by means of a conventional mixing and kneading apparatus. For example, a ball mill, a sand mill, a planetary mixer, a homogenizer and the like may be used as the mixing and kneading apparatus. A concentration of the pigment in the pigment dispersant may be preferably 3 to 25 % by weight based on the total weight of the pigment dispersant.

### Aqueous solvent (c)

The aqueous solvent (c) used in the aqueous ink composition of the present invention may be water alone or a mixed solvent of water and water-soluble organic solvent. As water, ion exchanged water (i.e. deionized water) is preferably used, different from general water containing various ions. An example of the water-soluble organic solvent used by mixing with water includes alkyl alcohol containing 1 to 4 carbon atoms, such as methyl alcohol, n-propyl alcohol, n-butyl alcohol, sec-butyl alcohol, tert-butyl alcohol and the like; amides, such as dimethylformamide, dimethylacetamide and the like; ketones or ketoalcohols such as acetone, diacetone alcohol and the like; ethers such as tetrahydrofuran, dioxane and the like; polyalkylene glycols such as polyethylene glycol, polypropylene glycol and the like; alkylene glycols, of which an alkylene group contains 2 to 6 carbon atoms, such as ethylene glycol, propylene glycol, butylene glycol, triethylene glycol, thiodiglycol, hexylene glycol, diethylene glycol and the like; lower alkyl ethers of polyhydric alcohol, such as ethyleneglycol monomethyl (or monoethyl) ether, dithyleneglycol methyl (or ethyl) ether, triethyleneglycol monomethyl (or monoethyl) ether and the like; N-methyl-2-pyrrolidone, 1,3-dimethyl-2-imidazolidinone and the like.

Among the various water-soluble organic solvents, polyhydric alcohols such as diethylene glycol, etc., lower alkyl ethers of polyhydric alcohol such as triethyleneglycol monomethyl (or monoethyl) ether, etc. are preferably used. Among polyhydric alcohols, triol is more preferable because it is a highly hygroscopic solvent. An example of triol used in the present invention includes glycerin, 1,2-hexanetriol, trimethylolpropane, derivatives thereof and the like may be also used.

In the present invention, the water-soluble organic solvent, particularly polyhydric alcohol can have a more excellent effect on the improvement of the water resistance by using in a lower amount than usual. A ratio (S:H) by weight of sulfonated polyethylene oxide (S) : polyhydric alcohol (H) is generally 1:1 to 1:5, preferably 1:2 to 1:4. A concentration of polyhydric alcohol may be 1.5 to 10 % by weight based on the total weight of the aqueous ink composition. When the concentration of polyhydric alcohol is too high, drying rate may decrease, and when it is too low, the desired effects (the further improvement of thermal stability and the like) may not be achieved. In this point, the concentration of polyhydric alcohol is preferably 4 to 9 % by weight based on the total weight of the aqueous ink composition. When the ratio of polyhydric alcohol to sulfonated ethyleneoxide is too high, the dispersibility of the pigment may decrease, and then it tends to bring about clogging of the nozzle. When it is too low, the desired effect may not be achieved.

The total concentration of sulfonated polyethylene oxide with polyhydric alcohol is generally 2 to 16 % by weight, preferably 5 to 13 % by weight based on the total weight of the ink composition. In this case, the concentration of the water-soluble organic solvent including polyhydric alcohol and the like may be generally lower than 10 % weight, preferably 4 to 9 % by weight based on the total weight of the aqueous ink composition.

### Other components

In addition to the components mentioned above, additives usually used in the aqueous ink can be also contained. Examples of the additives are amine compound, fluorochemical surfactant, urea and the like, as long as the technical effects of the present invention are not deteriorated.

### Aqueous ink composition

The aqueous ink composition of the present invention is generally produced by preparing a pigment dispersant containing the styrene - (meth)acrylic acid type water-soluble resin and the pigment, and then mixing it with the aqueous solvent containing the humectant and the water-soluble organic solvent.

Mixing the pigment dispersant with the aqueous solvent can be conducted using the same mixing and kneading apparatus as ones disclosed for the mixing of the pigment dispersant. When the pigment dispersant is mixed with the aqueous solvent, a mixing ratio of the pigment dispersant and the aqueous solvent is preferably controlled not to deteriorate the dispersibility of the pigment. In general, 3 to 10 parts by weigh of the aqueous solvent is used based on one part by weight of the pigment dispersant. When the less concentration of the pigment will be used, water may be added to the aqueous ink composition produced without deteriorating the dispersibility of the pigment to dilute.

The aqueous ink composition of the present invention can be used in a conventional ink jet printer. A specific example of the usable printer includes one which is available as the trade name of "Novajet III" from ENCAD Inc., one which is available as the name of "Serial No. BJ F8500" from CANNON Inc., and the like. A printing condition is not limited and may be freely set according to the printer used. For example, an ink-ejecting rate may be set within a range of 1,000 to 10,000 Hz.

The aqueous ink composition of the present invention may be utilized particularly suitable for the printer having the bubble jet ink-ejecting print head. For the print head containing the ink-ejecting nozzle of which the diameter is decreased to improve the resolution of the printer, the aqueous ink composition can be also prevented from hardening at the nozzle and can also have the rapid-drying property adjustable to the speeding up of the printing rate.

A medium for printing by the aqueous ink composition of the present invention includes conventional paper and sheet having an ink acceptable layer on a surface thereof. An example of the sheet having an ink acceptable layer includes an ink jet media "Serial No. IJ4331," available from Minnesota Mining And Manufacturing Company.

Since the printed image obtained from the aqueous ink composition of the present invention has excellent water resistance, a medium printing an image thereon can be also used outdoors. In case of the use of the medium outdoors, a surface of the printed image is covered with a transparent coating film with an adhesive layer, and a sealing tape is adhered around an edge of the printed image. The seal tape acts to prevent the moisture in a form of steam and the like from intruding from the edge of the medium into between the surface of the printed image and the coating film. The printed image formed with the aqueous ink composition of the present invention may have sufficient water resistance to use it outdoors (outdoors water resistance) even if the sealing tape is not adhered. Particularly, when the polyhydric alcohol is used in a relatively small amount based in the total weight of the solid content of the aqueous ink composition, the outdoors water resistance can be effectively improved.

### Examples

The present invention will be described in more detail with reference to the following examples. The present invention, however, should not be understood as limiting to the examples.

By using the formulations shown in the following Table 1 (unit: part(s) by weight), aqueous ink compositions having different colors (six colors in total) of Example were produced as follows. All ingredients but a pigment dispersant were mixed to prepare an aqueous solvent. The aqueous solvent was mixed with each pigment dispersant shown in Table1 (GA Cyan 2, GA Magenta 1, GA Yellow 1 and GA Black 1; pigment dispersants containing each pigment exhibiting each color, all of which were available as the trade name of "GA color series" from MIKUNI COLORANT K.K.) using a mixing apparatus (e.g. sand mill) to obtain an aqueous ink composition of Example. Regarding Light Cyan ink and Light Magenta ink, Cyan ink and Magenta ink were produced by mixing each of them with ion exchanged water, respectively. A dilution ratio of ink : ion exchanged water was 1:5.

An amount of ion exchanged water was determined so that each color pigment dispersant contained a styrene - (meth)acrylic acid type water-soluble resin in a concentration of 3.5 to 6.0 % by weight and each ink composition contained the styrene-(meth)acrylic acid type water-soluble resin within a range of 0.1 to 1.2 % by weight.

**Table 1**

| | Cyan | Magenta | Yellow | Black |
|---|---|---|---|---|
| GA Cyan 2 | 20 | 0 | 0 | 0 |
| GA Magenta 1 | 0 | 23 | 0 | 0 |
| GA Yellow 1 | 0 | 0 | 23 | 0 |
| GA Black 1 | 0 | 0 | 0 | 19 |
| Sulfonated polyethylene oxide | 3 | 3 | 3 | 3 |
| Diethylene glycol | 6 | 6 | 6 | 6 |
| Trimethylol propane | 3 | 3 | 3 | 3 |
| Deionized water | 68 | 65 | 65 | 69 |
| FC-120 | 0.1 | 0.1 | 0.1 | 0.1 |
| Total | 100.1 | 100.1 | 100.1 | 100.1 |

In Table 1, sulfonated polyethylene oxide was prepared according to the method disclosed in U.S. Patent No. 5,725,647 mentioned above, which was identified as sulfonated polyethylene oxide having the chemical structure shown in the above Formula 1. The sulfonated polyethylene oxide was a compound which was produced by transesterifying 49.3 g (= 0.333 eq) of dimethyl 5-sulfoisophthalate sodium salt with 400 g (=1.33 eq) of polyethylene oxide (available as the trademark of "Carbowax 600" from UNION CARBIDE Corp.; a number average molecular weight = approximately 600), and the compound had a hydroxyl value of 425.

FC-120 was a fluorine-containing surfactant available as the trade name of "Fluorad" from Minnesota Mining And Manufacturing Company. A pH value was controlled by adding an aqueous solution of amine (a 10 % N aqueous solution of N-dimethylethanol amine) to ion exchanged water in a droplet.

The resulting ink compositions of Example were evaluated for the following characteristics by method explained as follows.

### Thermal stabilily test

An Ink composition was charged into a glass container and sealed with a cover equipped with a structure for releasing an evaporating gas out of the container, followed by leaving it still in an oven at a temperature of 65 °C for a week. After passing the period of time, the container was removed from the oven and placed upside down to visually observe whether the precipitation was present or not, and how the ink was adhered on a wall of the container, and then thermal stability was evaluated. From the observation, in case where less precipitation and no agglomerated cake of the ink in the container, as well as no tint of the ink composition adhered on the walls were observed, the ink composition was judged to have good thermal stability.

### Printability test (1):

Printer: the trade name of "Novaj et III", available from ENCAD Inc.
Resolution: 300 dpi
Colors: four colors in total, consisting of C (Cyan), M (Magenta), Y (Yellow) and K (Black)
Direction for printing: one way
Number of a pass: four passes
Rate for ink-ejecting: 5000 Hz
Printing medium: Ink Jet Medium IJ4331, available from Minnesota Mining And Manufacturing Company
Printed image: formed with a color table for bleeding test, as well as an ISO image "Cafeteria"

### Printability test (2):

Printer: the name of "BJ F8500", available from CANNON Inc.
Resolution: 1,200 dpi
Colors: six colors in total, containing four colors consisting of C (Cyan), M (Magenta), Y (Yellow) and K (Black), and other two colors consisting of Light Cyan and Light Magenta
Printing set-up: color / black (for colors), or color / photo (six colors), BJ cross, highest image quality mode
Printing medium: Ink Jet Medium IJ4331, available from Minnesota Mining And Manufacturing Company
Printed image: formed with an ISO image "Cafeteria"

### Water resistance

A test sample was obtained by printing an image on the printing medium under the condition of the printing test (1) mentioned above to form printed images, which was attached to an aluminum plate and then left for 24 hours. The test sample was immersed in water at a room temperature (about 25 °C) for one minute and then rubbed 5 passes both way by a finger to observe an appearance of the test sample, such as ink flow and the like.

For all ink compositions of Example, results from the above tests are explained as follows. All of them were judged to be good

Thermal stability: Judged to be good. There was very less amount of precipitation, and no tint of the ink composition attached on the wall was observed.

Printability (1): No occurrence of nozzle clogging. Very high color density. No bleeding at a printing amount of each of the C, M, Y and K ink compositions of 400 %. The color density of the resulting ISO image was much higher than Comparative Example 1 (as mentioned below). Drying rate was sufficiently fast, and it had no problems in practice.

Printability (2): No occurrence of nozzle clogging. No banding was also observed at a Solids Color portion (i.e. a monochrome solid colored portion). Drying rate was sufficiently fast, and it had no problems in practice.

As used herein, the term "banding" means a disadvantage that the resulting printed image apparently looks like a band by a presence of a deep colored portion and a pale colored portion. It may be observed due to unevenness of an amount of ejected ink, including occurrence of nozzle clogging, and less spreading ability of ink after an attachment (adherence) of ink to a printing medium.

Water resistance: Few flow of ink was observed, which was not within a level to damage image quality of printed image. There were no problems in practice.

### Comparative Example 1

Aqueous ink compositions of this Comparative Example were produced in the same way as mentioned in the above Example, except that the pigment dispersant did not contain the styrene - (meth)acrylic acid type water-soluble resin. These ink compositions were evaluated in the same way as mentioned in Example. Results from the tests are explained as follows.

Thermal stability: Judged to be bad. There were more amounts of precipitation than that of Example. For the C, Y and K colored ink compositions attached on the wall, a tint was observed.

Printability (1): No occurrence of nozzle clogging. Very high color density. But bleeding at a printing amount of each of the C, M, Y and K ink compositions of 400 % was observed. Drying rate was sufficiently fast, and it had no problems in practice

Printability (2): Not evaluated. (More amounts of precipitation were observed during the above thermal stability test. It was predictable that nozzle clogging might occur in the high resolution printer, and therefore, the use of this type of the printer was stopped.)

Water resistance: Since the ink flow was observed for all of the color ink compositions, these ink compositions were judged to be a level of failure in the quality of the printed image.

### Comparative Example 2

Aqueous ink compositions of this Comparative Example were produced in the same way as mentioned in Example, except that pigment dispersants "Serial No. SPC-0180 series" available from MIMAKI ENGINEERING Co. Ltd. were used, and that sulfonated polyethylene oxide was not employed. These pigment dispersants contained the styrene - (meth)acrylic acid type water-soluble resin. The resulting ink compositions were also evaluated in the same way as mentioned in the Example. Results from the tests are explained as follows.

Thermal stability: Judged to be good. There was very less amount of precipitation, and no tint was observed for the ink compositions attached on the wall.

Printability (1): The ink-ejecting property was gradually deteriorated during the test. The color density was low, and banding was observed at the Solids Color portion. From these disadvantages, it was judged that nozzle clogging occurred. In addition, bleeding at a printing amount of each of the C, M, Y and K ink compositions of 400 % was observed. For the resulting ISO image, the color density was decreased. However, drying rate was sufficiently fast, and it had no problems in practice.

Printability (2): Not evaluated. (Since the ink-ejecting characteristics were deteriorated even for use in the lower resolution printer in the printability test (1), nozzle clogging might occur in the high resolution printer, and therefore, the use of this type of the printer was stopped.)

Water resistance: For all of the color ink compositions, no ink flow was observed.

As explained above, the present invention can provide an aqueous ink composition, which has good thermal stability, can effectively prevent nozzle clogging and can also effectively increase drying rate and water resistance of printed images, even when it is used with a high resolution (e.g. more than 1,200 dpi) bubble jet-type ink jet printer.

## Claims

1. An aqueous ink composition for an ink jet printer, comprising (a) a water-soluble pigment dispersing resin, (b) a pigment, (c) an aqueous solvent and (d) a humectant, wherein the water-soluble pigment dispersing resin (a) is a styrene - (meth)acrylic acid type resin, and the humectant (d) contains sulfonated polyethylene oxide.

2. The aqueous ink composition for an ink jet printer according to claim 1, wherein the aqueous solvent (c) contains water and a water-soluble organic solvent.

3. The aqueous ink composition for an ink jet printer according to claim 2, wherein the water-soluble organic solvent is polyhydric alcohol.

4. The aqueous ink composition for an ink jet printer according to claim 2 or 3, wherein the water-soluble organic solvent is present in an amount of 1.5 to 10 percents by weight based on the total weight of the aqueous ink composition.

## Patentansprüche

1. Wäßrige Tintenzusammensetzung für einen Tintenstrahldrucker, die (a) ein wasserlösliches Pigmentdispergierharz, (b) ein Pigment, (c) ein wäßriges Lösungsmittel, und (d) ein Feuchthaltemittel umfasst, wobei das wasserlösliche Pigmentdispergierharz (a) ein Harz vom Styrol-(Meth)acrylsäure-Typ ist und das Feuchthaltemittel (d) sulfoniertes Polyethylenoxid enthält.

2. Wäßrige Tintenzusammensetzung für einen Tintenstrahldrucker nach Anspruch 1, wobei das wäßrige Lösungsmittel (c) Wasser und ein wasserlösliches organisches Lösungsmittel enthält.

3. Wäßrige Tintenzusammensetzung für einen Tintenstrahldrucker nach Anspruch 2, wobei das wasserlösliche organische Lösungsmittel ein mehrwertiger Alkohol ist.

4. Wäßrige Tintenzusammensetzung für einen Tintenstrahldrucker nach Anspruch 2 oder 3, wobei das wasserlösliche organische Lösungsmittel in einer Menge von 1,5 bis 10 Gewichtsprozent, bezogen auf das Gesamtgewicht der wäßrigen Tintenzusammensetzung, vorliegt.

## Revendications

1. Composition d'encre aqueuse pour imprimante à jet d'encre, comprenant (a) une résine hydrosoluble pour la dispersion des pigments, (b) un pigment, (c) un solvant aqueux et (d) un humectant, dans laquelle la résine hydrosoluble pour la dispersion des pigments (a) est une résine de type styrène-acide (méth)acrylique, et l'humectant (d) contient de l'oxyde de polyéthylène sulfoné.

2. Composition d'encre aqueuse pour imprimante à jet d'encre selon la revendication 1, dans laquelle le solvant aqueux (c) contient de l'eau et un solvant organique hydrosoluble.

3. Composition d'encre aqueuse pour imprimante à jet d'encre selon la revendication 2, dans laquelle le solvant organique hydrosoluble est un alcool polyvalent.

4. Composition d'encre aqueuse pour imprimante à jet d'encre selon la revendication 2 ou la revendication 3, dans laquelle le solvant organique hydrosoluble est présent dans une quantité représentant un pourcentage pondéral de 1,5 à 10 % du poids total de la composition d'encre aqueuse.
